# EUROPEAN PATENT APPLICATION

(11) **EP 4 585 077 A2**
(43) Date of publication of application: **16.07.2025**
(21) Application number: 24203140.9
(22) Date of filing: 27.09.2024
(51) Int. Cl.: A24F 40/40, H01M 50/213

(54) **ELECTRONIC ATOMIZATION DEVICE AND BATTERY ASSEMBLY**

(30) Priority: 27.09.2023 CN 202322648239 U
(71) Applicant: Smoore International Holdings Limited, George Town, Grand Cayman, KY1-1111 (KY)
(72) Inventor: LIU, Yu, Shenzhen, Guangdong, 518102 (CN); JIN, Hu, Shenzhen, Guangdong, 518102 (CN)
(74) Representative: Herrero & Asociados, S.L.

(57) **Abstract**

The present application discloses an electronic atomization device and a battery assembly. The electronic atomization device includes a housing assembly, a battery core mounting assembly and a battery core assembly. The battery core mounting assembly is arranged in the housing assembly, and the battery core assembly is connected with the battery core mounting assembly in a pluggable manner. In this way, the battery core assembly is convenient to be disassembled from the battery core mounting assembly, and it is conducive to recycling and replacing the battery core assembly. Furthermore, the assembly process does not involve welding wires, which is conducive to saving man-hours and improving assembly efficiency.

## Description

### TECHNICAL FIELD

The present disclosure relates to the field of electronic atomization technologies, and in particular to an electronic atomization device and a battery assembly.

### BACKGROUND

The electronic atomization device is usually composed of an atomization assembly, a battery core assembly, a charging circuit board, etc. Both the atomization assembly and the battery core assembly are electrically connected with the charging circuit board, and the charging circuit board controls the battery core assembly to supply power to the atomization assembly, enabling the atomization assembly to atomize an aerosol generating substance to generate an aerosol.

Currently, a battery core of the battery core assembly is usually a pouch-type battery core, with positive and negative electrodes located at two ends of the battery core respectively, and wires need to be separately welded to establish electrical connection between the battery core and the charging circuit board, which is not convenient to disassemble.

### SUMMARY

The present disclosure provides an electronic atomization device and a battery assembly for convenient disassembly.

In order to solve the above technical problem, a first technical solution provided in the present disclosure is an electronic atomization device, including a housing assembly, a battery core mounting assembly and a battery core assembly. The battery core mounting assembly is arranged in the housing assembly. The battery core assembly is connected with the battery core mounting assembly in a pluggable manner.

In order to solve the above technical problem, a second technical solution provided in the present disclosure is a battery assembly, and the battery includes a battery core mounting assembly and a battery core assembly. The battery core assembly is connected with the battery core mounting assembly in a pluggable manner.

Beneficial effects of the present disclosure are as follows. Different from the related art, the present disclosure provides the electronic atomization device. The electronic atomization device includes the housing assembly, the battery core mounting assembly and the battery core assembly. The battery core mounting assembly is arranged in the housing assembly, and the battery core assembly is connected with the battery core mounting assembly in the pluggable manner. In this way, the battery core assembly is convenient to be disassembled from the battery core mounting assembly, and it is conducive to recycling and replacing the battery core assembly. Furthermore, the assembly process does not involve welding wires, which is conducive to saving man-hours and improving assembly efficiency.

### BRIEF DESCRIPTION OF THE DRAWINGS

In order to illustrate the technical solutions in the embodiments of the present disclosure more clearly, the drawings that need to be used in the description in the embodiments will be briefly introduced below. Obviously, the drawings in the following description are merely some embodiments of the present disclosure, and for those skilled in the art, other drawings may also be obtained according to these drawings under the premise of without making creative efforts.
FIG. 1 is a schematic structural view of an electronic atomization device according to an embodiment of the present disclosure.
FIG. 2 is a schematic structural view of an atomization assembly shown in FIG. 1 according to an embodiment of the present disclosure.
FIG. 3 is a schematic view of a gas-liquid flow direction in the atomization assembly shown in FIG. 2 according to an embodiment of the present disclosure.
FIG. 4 is a schematic structural view of a battery core assembly shown in FIG. 1 according to an embodiment of the present disclosure.
FIG. 5 is an exploded view of a battery core mounting assembly shown in FIG. 1 according to an embodiment of the present disclosure.
FIG. 6 is a schematic structural view of an elastic clip shown in FIG. 5 in a view state according to an embodiment of the present disclosure.
FIG. 7 is a schematic structural view of the elastic clip shown in FIG. 5 in another view state according to an embodiment of the present disclosure.
FIG. 8 is a schematic structural view of a cover plate defining with a through hole shown in FIG. 5 according to an embodiment of the present disclosure.
FIG. 9 is a schematic structural view of a cover plate defining with a through hole shown in FIG. 5 according to another embodiment of the present disclosure.
FIG. 10 is an enlarged view of a region A shown in FIG. 1 according to an embodiment of the present disclosure.
FIG. 11 is an exploded view of a housing assembly shown in FIG. 1 according to an embodiment of the present disclosure.

### DETAILED DESCRIPTION

The technical solutions in the embodiments of the present disclosure will be clearly and completely described below with reference to the accompanying drawings in the embodiments of the present disclosure. Obviously, the described embodiments are merely some of the embodiments of the present disclosure, rather than all of the embodiments. All other embodiments obtained by persons of ordinary skill in the art according to the embodiments of the present disclosure without making creative efforts belong to the protection scope of the present disclosure.

In the following description, specific details such as specific system structures, interfaces, technologies, etc., are presented for purposes of illustration rather than purposes of limitation, in order to provide a thorough understanding of the present disclosure.

The terms "first", "second", and "third" in the present disclosure are merely used for descriptive purposes, and may not be understood as indicating or implying relative importance or implicitly indicating the number of indicated technical features. Thus, features defining with "first", "second", and "third" may explicitly or implicitly include at least one of these features. In the description of the present disclosure, the term "plurality" means at least two, such as two, three, etc., unless otherwise specifically defined. All directional indications (such as up, down, left, right, front, back...) in the embodiments of the present disclosure are merely used to explain relative positional relationships, sports conditions, etc., between various components in a specific posture (as shown in the drawings). If the specific posture changes, the directional indications may also change accordingly. The terms "include" and "have", as well as any variations thereof in the present disclosure, are intended to cover a non-exclusive inclusion. For example, a process, method, system, product, or device that includes a series of steps or units is not limited to the listed steps or units, but optionally also includes unlisted steps or units, or optionally also includes other steps or units inherent in the process, method, product, or device.

Reference to the term "embodiment" in the specification means that particular features, structures, or characteristics described with the embodiment may be included in at least one embodiment of the present disclosure. The term appearing in various positions in the specification may not necessarily refer to the same embodiment, or an independent or alternative embodiment that is mutually exclusive with other embodiments. Those skilled in the art may explicitly and implicitly understand that the embodiments described in the specification may be combined with other embodiments.

The present disclosure will be described in detail below in conjunction with the accompanying drawings and embodiments.

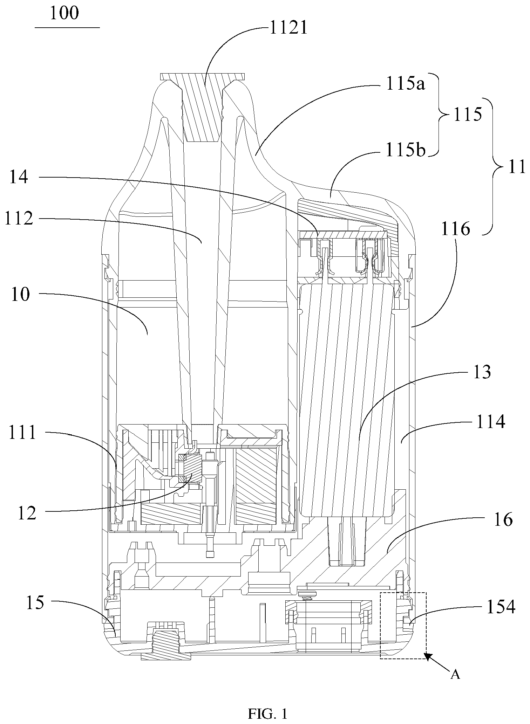

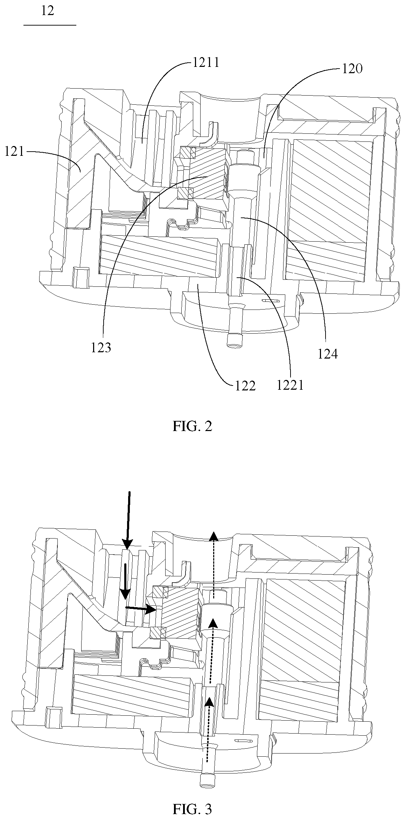

As shown in FIG. 1 to FIG. 3, FIG. 1 is a schematic structural view of an electronic atomization device according to an embodiment of the present disclosure, FIG. 2 is a schematic structural view of an atomization assembly shown in FIG. 1 according to an embodiment of the present disclosure, and FIG. 3 is a schematic view of a gas-liquid flow direction in the atomization assembly shown in FIG. 2 according to an embodiment of the present disclosure.

The present disclosure provides an electronic atomization device 100 configured to atomize an aerosol generating substance. The electronic atomization device 100 may be applied in different fields, such as medical treatment, beauty treatment and recreational inhalation, etc. In some embodiments, the electronic atomization device 100 is used for recreational inhalation.

The electronic atomization device 100 includes a housing assembly 11, an atomization assembly 12, a battery core assembly 13, a battery core mounting assembly 14 and a bottom cover 15. The atomization assembly 12 is configured to store and atomize the aerosol generating substance. The battery core assembly 13 is configured to provide power to the atomization assembly 12. The atomization assembly 12, the battery core assembly 13 and the battery core mounting assembly 14 are arranged in the housing assembly 11. One end of the housing assembly 11 includes an open end, the bottom cover 15 is detachably connected with the open end of the housing assembly 11, and the bottom cover 15 seals off the open end of the housing assembly 11.

The battery core assembly 13 is connected with the battery core mounting assembly 14 in a pluggable manner. In related art, a connection of the battery core assembly and other structural members is realized by the method of welding wires, and the wires need to be cut off for disassembly. However, cutting off the wires may cause the battery core assembly to short circuit and then cause problems such as heating and fire. In embodiments of the present disclosure, the battery core assembly 13 is connected with the battery core mounting assembly 14 in the pluggable manner, and the battery core assembly 13 may be convenient to be disassembled from the battery core mounting assembly 14 without damaging the structure of the battery core assembly 13, which avoids the battery core assembly 13 to short circuit causing the problems such as heating and fire during the disassembly process, thereby improving safety performance. Furthermore, it is conducive to recycling and replacing the battery core assembly 13. The assembly process does not involve welding wires and is simple, which is conducive to saving man-hours, improving assembly efficiency, and achieving automatic assembly.

The housing assembly 11 is defined with a first mounting cavity 111, and the atomization assembly 12 is arranged in the first mounting cavity 111. The housing assembly 11 is defined with an atomization channel 112. One port of the atomization channel 112 is used as a vaping port 1121, and the user inhales the aerosol through the vaping port 1121; another port of the atomization channel 112 is embedded in the atomization assembly 12, and the atomization channel 112 is fluidly communicated with the atomization assembly 12. The housing assembly 11 and the atomization assembly 12 are defined to form a liquid storage cavity 10.

The atomization assembly 12 includes a first atomization base 121, a second atomization base 122, an atomization core 123 and an atomization pin 124. In some embodiments, an atomization surface of the atomization core 123 is basically parallel to the axis direction of the atomization channel 112, that is, lateral atomization. The structure of the atomization assembly 12 is introduced by taking lateral atomization as an example. In some embodiments, the atomization surface of the atomization core 123 may be away from the vaping port 1121 (i.e., facing downward atomization), or the atomization surface of the atomization core 123 may face toward the vaping port (i.e., facing upward atomization). The structure of the first atomization base 121 and the second atomization base 122 may be changed according to the position relationship between the atomization surface of the atomization core 123 and the vaping port 1121.

The first atomization base 121 is detachably connected with the second atomization base 122. The first atomization base 121 is located on the side of the second atomization base 122 away from the bottom cover 15. In other words, the first atomization base 121 is located on the side of the second atomization base 122 close to the vaping port 1121. The atomization core 123 is mounted to the first atomization base 121. The first atomization base 121 is defined with a liquid outlet hole 1211, and the liquid outlet hole 1211 is fluidly communicated with the atomization core 123. The aerosol generating substance in the liquid storage cavity 10 flows to the atomization core 123 through the liquid outlet hole 1211, and is heated and atomized by the atomization core 123 to generate the aerosol.

The first atomization base 121 and the second atomization base 122 cooperate to form a cavity 120. The end of the atomization channel 112 is embedded in the first atomization base 121, and the atomization channel 112 is communicated with the cavity 120. The atomization surface of the atomization core 123 is exposed to cavity 120, and the aerosol overflowing from the atomization surface of the atomization core 123 is released in the cavity 120. The second atomization base 122 is defined with an air inlet hole 1221, and the air inlet hole 1221 is communicated with the cavity 120. The gas entering from the air inlet hole 1221 flows through the atomization surface of the atomization core 123 and carries the aerosol generated by the atomization core 123 to the atomization channel 112.

The atomization core 123 includes a liquid guide member (not labeled) and a heating element (not labeled). The liquid guide member includes a liquid absorption surface and the atomization surface that are oppositely arranged, the liquid absorption surface is fluidly communicated with the liquid outlet hole 1211, and the atomization surface is fluidly communicated with the cavity 120. The heating element is arranged on the atomization surface. The liquid guide member has a capillary force that guides the aerosol generating substance from the liquid absorption surface to the atomization surface, maintaining sufficient liquid supply to the heating element. The heating element heats and atomizes the aerosol generating substance to generate the aerosol. In some embodiments, the liquid guide member includes a porous ceramic, and the disordered pores generated during the producing process of the porous ceramic have capillary force. In some embodiments, the heating element includes a heating film, which may be formed on the atomization surface by means of vapor deposition or sputtering.

The atomization assembly 12 includes two atomization pins 124, and the two atomization pins 124 are fixed on the second atomization base 122. In some embodiments, the atomization surface of the atomization core 123 is basically parallel to the axis direction of the atomization channel 112. The side surfaces of the two atomization pins 124 are respectively countered with the positive and negative poles of the heating film of the atomization core 123, enabling the atomization pins 124 to be electrically connected with the atomization core 123.

The housing assembly 11 is also defined with a second mounting cavity 114, and the battery core assembly 13 and the battery core mounting assembly 14 are arranged in the second mounting cavity 114. The electronic atomization device 100 presents a flat appearance form, which has a length direction, a width direction and a thickness direction. Both the width direction and the thickness direction are perpendicular to the length direction, and the dimension of the electronic atomization device 100 in the thickness direction is less than the dimension of the electronic atomization device 100 in the width direction. The first mounting cavity 111 and the second mounting cavity 114 are arranged side-by-side along the width direction of the electronic atomization device, and such arrangement provides ample mounting space to the atomization assembly 12, the battery core assembly 13 and the battery core mounting assembly 14. The atomization assembly 12 is located in one cavity, while both the battery core assembly 13 and the battery core mounting assembly 14 are located in other cavity. This arrangement prevents the aerosol atomized by the atomization assembly 12 from entering the second mounting cavity 114 and causing damage to an battery core 131 of the battery core assembly 13 and an adapter plate 143 of the battery core mounting assembly 14 in the second mounting cavity 114. Furthermore, pollution of the aerosol may reduce, ensuring that the aerosol is more pure.

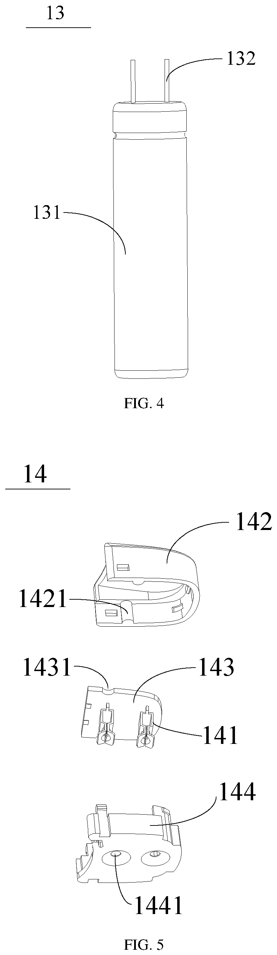

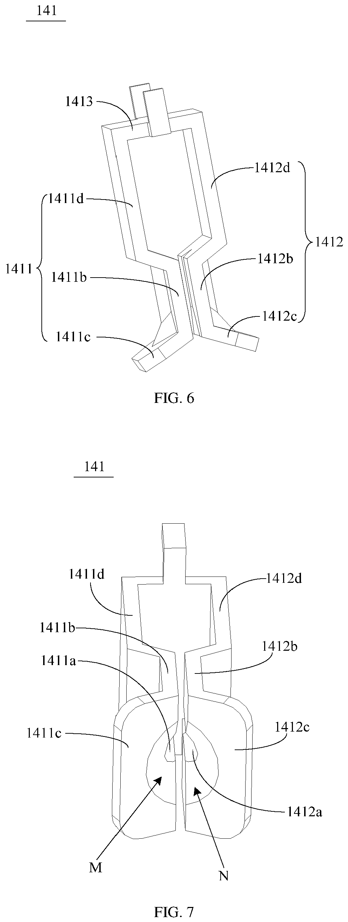

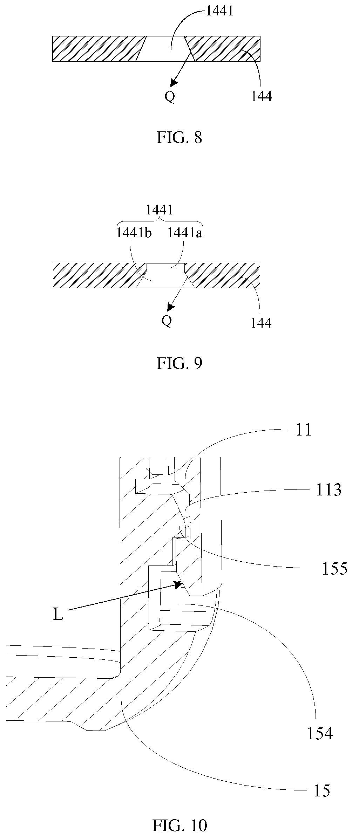

As shown in FIG. 4 to FIG. 9, FIG. 4 is a schematic structural view of a battery core assembly shown in FIG. 1 according to an embodiment of the present disclosure, FIG. 5 is an exploded view of a battery core mounting assembly shown in FIG. 1 according to an embodiment of the present disclosure, FIG. 6 is a schematic structural view of an elastic clip shown in FIG. 5 in a view state according to an embodiment of the present disclosure, FIG. 7 is a schematic structural view of the elastic clip shown in FIG. 5 in another view state according to an embodiment of the present disclosure, FIG. 8 is a schematic structural view of a cover plate defining with a through hole shown in FIG. 5 according to an embodiment of the present disclosure, and FIG. 9 is a schematic structural view of a cover plate defining with a through hole shown in FIG. 5 according to another embodiment of the present disclosure.

The battery core assembly 13 includes the battery core 131 and two electrode pins 132, and the two electrode pins 132 are arranged at the end of the battery core 131 close to the battery core mounting assembly 14.

The battery core mounting assembly 14 includes two elastic clips 141, and the two elastic clips 141 are correspondingly arranged with the two electrode pins 132 one by one. The elastic clips 141 clamp the electrode pins 132 to realize the battery core assembly 13 being connected with the battery core mounting assembly 14 in the pluggable manner. It should be noted that the present disclosure is not limited to using the elastic clips 141 to clamp the electrode pins 132 to achieve the battery core assembly 13 being connected with the battery core mounting assembly 14 in the pluggable manner. For example, the battery core mounting assembly 14 may be defined with an insertion hole with elastic shrinking blocks are arranged at intervals on the hole wall of the insertion hole, enabling the elastic shrinking blocks to clamp the electrode pin 132 when the electrode pin 132 of the battery core assembly 13 is inserted into the insertion hole, thereby achieving the battery core assembly 13 being connected with the battery core mounting assembly 14 in the pluggable manner.

As shown in FIG. 6 and FIG. 7, each of the elastic clips 141 includes a first clip 1411 and a second clip 1412 that are arranged oppositely and at intervals. The surface of the first clip 1411 close to the second clip 1412 is defined with a first insertion groove 1411a, and the surface of the second clip 1412 close to the first clip 1411 is defined with a second insertion groove 1412a. The first insertion groove 1411a and the second insertion groove 1412a are cooperated to form an insertion hole (not labeled), and the electrode pin 132 is arranged in the insertion hole. The shape of the insertion hole is arranged in accordance with the shape of the electrode pin 132, and the size of the insertion hole is arranged in accordance with the size of the electrode pin 132, enabling the elastic clip 14 to clamp and fix the electrode pin 132.

In some embodiments, the end of the first clip 1411 close to the battery core assembly 13 is inclined towards a direction away from the second clip 1412, the end of the second clip 1412 close to the battery core assembly 13 is inclined towards a direction away from the first clip 1411. The end of the first clip 1411 and the end of the second clip 1412 are arranged to be inclined and play guide roles, facilitating the electrode pin 132 to be inserted between the first clip 1411 and the second clip 1412, thereby improving assembly efficiency and achieving automatic assembly.

In some embodiments, the bottom wall of the end of the first insertion groove 1411a close to the battery core assembly 13 includes a first inclined surface M, and the first inclined surface M is inclined towards the direction away from the second clip 1412. The bottom wall of the end of the second insertion groove 1412a close to the battery core assembly 13 includes a second inclined surface N, and the second inclined surface N is inclined towards the direction away from the first clip 1411. The arrangement of the first inclined surface M and the second inclined surface N enables the first inclined surface M and the second inclined surface N to play guide roles, facilitating the electrode pin 132 to be inserted between the first clip 1411 and the second clip 1412, thereby improving assembly efficiency and achieving automatic assembly. In some embodiments, the electrode pin 132 is of cylindrical, and the first inclined surface M and/or the second inclined surface N are concave arc surfaces, thereby facilitating the electrode pin 132 to be inserted between the first clip 1411 and the second clip 1412.

In some embodiments, the end of the first clip 1411 close to the battery core assembly 13 is inclined towards the direction away from the second clip 1412, and the end of the second clip 1412 close to the battery core assembly 13 is inclined towards the direction away from the first clip 1411. The first clip 1411 includes the first inclined surface M, and the second slip 1412 includes the second inclined surface N, thereby facilitating the electrode pin 132 to be inserted between the first clip 1411 and the second clip 1412, improving assembly efficiency and achieving automatic assembly. In some embodiments, the first clip 1411 includes a first subsection 1411b and a second subsection 1411c connected to each other, with the first subsection 1411b located on the side of the second subsection 1411c away from the battery core assembly 13. The second clip 1412 includes a third subsection 1412b and a fourth subsection 1412c connected to each other, with the third subsection 1412b located on the side of the fourth subsection 1412c away from the battery core assembly 13. The first subsection 1411b extends in a direction parallel to an insertion direction of the electrode pin 132. The first subsection 1411b and the third subsection 1412b are parallel to each other. The second subsection 1411c is inclined towards the direction away from the second clip 1412 relative to the first subsection 1411b. The fourth subsection 1412c is inclined towards the direction away from the first clip 1411 relative to the third subsection 1412b. The surface of the first subsection 1411b close to the third subsection 1412b is defined with the first insertion groove 1411a, the bottom wall of the end of the first insertion groove 1411a close to the battery core assembly 13 includes the first inclined surface M, and the first inclined surface M is inclined towards a direction away from the third subsection 1412b. The surface of the third subsection 1412b close to the first subsection 1411b is defined with the second insertion groove 1412a, the bottom wall of the end of the second insertion groove 1412a close to the battery core assembly 13 includes the second inclined surface N, and the second inclined surface N is inclined towards a direction away from the first subsection 1411b.

In some embodiments, both the end of the first clip 1411 and the end of the second clip 1412 away from the battery core assembly 13 are directly connected to the adapter plate 143 (as shown in the following description).

In some embodiments, each of the elastic clips 141 also includes a connecting clip 1413. The two opposite ends of the connecting clip 1413 are respectively connected with the first clip 1411 and the second clip 1412. The connecting clip 1413 is connected to the adapter plate 143 (as shown in the following description).

In some embodiments, each of the elastic clips 141 includes the first clip 1411, the second clip 1412 and the connecting clip 1413. The first clip 1411 and the second clip 1412 are arranged oppositely and at intervals, and the two opposite ends of the connecting clip 1413 are respectively connected with the first clip 1411 and the second clip 1412.

The first clip 1411 includes a fifth subsection 1411d, the first subsection 1411b and the second subsection 1411c that are connected in sequence, with the first subsection 1411b located on the side of the second subsection 1411c away from the battery core assembly 13 and the fifth subsection 1411d located on the side of the first subsection 1411b away from the battery core assembly 13. The second clip 1412 includes a sixth subsection 1412d, the third subsection 1412b and the fourth subsection 1412c that are connected in sequence, with the third subsection 1412b located on the side of the fourth subsection 1412c away from the battery core assembly 13 and the sixth subsection 1412d located on the side of the third subsection 1412b away from battery core assembly 13.

The first subsection 1411b extends in the direction parallel to the insertion direction of the electrode pin 132. The first subsection 1411b and the third subsection 1412b are parallel to each other. The second subsection 1411c is inclined towards the direction away from the second clip 1412 relative to the first subsection 1411b. The fourth subsection 1412c is inclined towards the direction away from the first clip 1411 relative to the third subsection 1412b. Along a direction away from the battery core assembly 13, the fifth subsection 1411d bends in the direction away from the second clip 1412 and extends in a direction parallel to the first subsection 1411b. The sixth subsection 1412d bends in the direction away from the first clip 1411 and extends in a direction parallel to the third subsection 1412b. The end of the fifth subsection 1411d away from the first subsection 1411b is connected to the connecting clip 1413, and the end of the sixth subsection 1412d away from the third subsection 1412b is connected to the connecting clip 1413.

The surface of the first subsection 1411b close to the third subsection 1412b is defined with the first insertion groove 1411a, the bottom wall of the end of the first insertion groove 1411a close to the battery core assembly 13 includes the first inclined surface M, and the first inclined surface M is inclined towards the direction away from the third subsection 1412b. The surface of the third subsection 1412b close to the first subsection 1411b is defined with the second insertion groove 1412a, the bottom wall of the end of the second insertion groove 1412a close to the battery core assembly 13 includes the second inclined surface N, and the second inclined surface N is inclined towards the direction away from the first subsection 1411b.

The arrangement of the fifth subsection 1411d, the first subsection 1411b and the second subsection 1411c of the first clip 1411, and the arrangement of the sixth subsection 1412d, the third subsection 1412b and the fourth subsection 1412c of the second clip 1412, enable the elastic clip 141 to well clamp the electrode pin 132 and facilitate the insertion of the electrode pin 132, thereby facilitating installation and disassembly.

As shown in FIG. 5, the battery core mounting assembly 14 also includes an adapter plate base 142, the adapter plate 143 and a cover plate 144. The elastic clips 141 and the adapter plate 143 are located between the adapter plate base 142 and the cover plate 144. The elastic clips 141 are arranged on the surface of the adapter plate 143 close to the cover plate 144, and the cover plate 144 is located at the side of the adapter plate 143 close to the battery core assembly 13. In some embodiments, the adapter plate 143 may include a PCB board. In some embodiments, the adapter plate base 142 is connected to the cover plate 144 by a snap fit. In some embodiments, the adapter plate 143 includes a first positioning portion 1431, the adapter plate base 142 includes a second positioning portion 1421, and the second positioning portion 1421 is cooperatively arranged with the first positioning portion 1431 to prevent the assembly process from being installed incorrectly and improve assembly efficiency.

The cover plate 144 is defined with a through hole 1441, and the electrode pin 132 penetrates through the through hole 1441 and is clamped by the elastic clip 141. That is to say, the through hole 1441 is arranged corresponding to the insertion hole formed in the elastic clip 141.

In some embodiments, as shown in FIG. 8, the hole wall of through hole 1441 includes a third inclined surface Q. The cross-sectional area of the through hole 1441 gradually increases along a direction of the cover plate 144 pointing towards the battery core assembly 13. The arrangement of the through hole 1441 enables the third inclined surface Q to play a guide role, facilitates the insertion of the electrode pin 132, and improves assembly efficiency. In some embodiments, the electrode pin 132 is of cylindrical, and the third inclined surface Q is a concave arc surface, facilitating the insertion of the electrode pin 132.

In some embodiments, as shown in FIG. 9, the through hole 1441 includes a first hole segment 1441a and a second hole segment 1441b. The second hole segment 1441b is located at the side of the first hole segment 1441a close to the battery core assembly 13. The hole wall of the second hole segment 1441b includes the third inclined surface Q. The cross-sectional area of the second hole segment 1441b gradually increases along the direction of the cover plate 144 pointing towards the battery core assembly 13. The arrangement of the through hole 1441 enables the third inclined surface Q to play a guide role, facilitates the insertion of the electrode pin 132, and improves assembly efficiency. In some embodiments, the electrode pin 132 is of cylindrical, and the third inclined surface Q is a concave arc surface, facilitating the insertion of the electrode pin 132.

In some embodiments, the battery core mounting assembly 14 has an interference fit with the housing assembly 11, and a connecting force between the battery core mounting assembly 14 and the housing assembly 11 is greater than a connecting force between the battery core assembly 13 and the battery core mounting assembly 14. Through the interference fit between the battery core mounting assembly 14 and the housing assembly 11, tight assembly between the battery core mounting assembly 14 and the housing assembly 11 may be achieved, ensuring that the battery core mounting assembly 14 is not easy to fall out or to be pulled out, and preventing the battery core mounting assembly 14 from being pulled out when the battery core assembly 13 is unplugged.

In some embodiments, as shown in FIG. 1, the side surface of bottom cover 15 is defined with a groove 154, at least part of the groove 154 is exposed from the housing assembly 11, and the groove 154 is adjacent to a junction of the bottom cover 15 and the housing assembly 11. By defining the groove 154 at a position adjacent to the junction of the bottom cover 15 and the housing assembly 11, and making at least part of the groove 154 to be exposed from the housing assembly 11, a force point is provided for disassembly of the bottom cover 15 and the housing assembly 11, facilitating the disassembly. In some embodiments, the bonding strength of the connection between the bottom cover 15 and the housing assembly 11 is strong, and the disassembly of the bottom cover 15 and the housing assembly 11 may be realized with tools, ensuring functions of the electronic atomization device to be normal.

In some embodiments, the bottom cover 15 may be magnetically connected with the housing assembly 11.

In some embodiments, as shown in FIG. 10, FIG. 10 is an enlarged view of a region A shown in FIG. 1 according to an embodiment of the present disclosure. The bottom cover 15 has a snap-fit connection with the housing assembly 11. In some embodiments, the side surface of the bottom cover 15 is provided with a hook 155, the inner surface of the housing assembly 11 is defined with a slot 113, and the hook 155 is arranged in conjunction with the slot 113 to realize the snap-fit connection between the bottom cover 15 and the housing assembly 11. The groove 154 and the hook 155 are arranged at intervals, and the groove 154 is arranged adjacent to the hook 155. The housing assembly 11 shields a part of the groove 154. A connection of the end surface of the housing assembly 11 away from the vaping port 1121 and the inner surface of the housing assembly 11 includes a fourth inclined surface L. In this way, it is convenient for tools to extend into the groove 154 to assist in the disassembly of the bottom cover 15 and the housing assembly 11, thereby realizing the recycling and replacement of the battery core assembly 13.

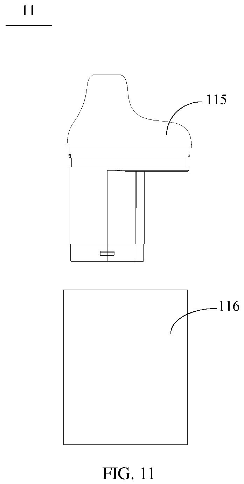

In some embodiments, as shown in FIG. 11, FIG. 11 is an exploded view of a housing assembly shown in FIG. 1 according to an embodiment of the present disclosure. The housing assembly 11 includes a housing 115 and a battery tube 116. The battery tube 116 is sleeved outside of the housing 115. The battery tube 116 is detachably connected with the bottom cover 15. As shown in FIG. 11 in conjunction with FIG. 1, the housing 115 includes a first sub-housing 115a and a second sub-housing 115b, with the first sub-housing 115a and the second sub-housing 115b arranged side-by-side. In some embodiments, the first sub-housing 115a and the second sub-housing 115b are integrally molded.

The first sub-housing 115a is defined with the atomization channel 112 and the first mounting cavity 111, and the atomization assembly 12 is located in the first mounting cavity 111 and seals off the open end of the first mounting cavity 111. The first sub-housing 115a is combined with the atomization assembly 12 located in the first mounting cavity 111 to form the liquid storage cavity 10. The outer surface of the second sub-housing 115b and the outer surface of the end of the first sub-housing 115a away from the bottom cover 15 have a smooth transition. A distance between the end of the second sub-housing 115b close to the bottom cover 15 and the bottom cover 15 is greater than a distance between the end of the first sub-housing 115a close to the bottom cover 15 and the bottom cover 15. The outer surface of the part of the first sub-housing 115a close to the second sub-housing 115b is combined with the inner surface of the second sub-housing 115b and the inner surface of the battery tube 116 to form the second mounting cavity 114. The battery core mounting assembly 14 and the battery core assembly 13 are arranged in the second mounting cavity 114. The battery core mounting assembly 14 is arranged in the second sub-housing 115b, and is in interference fit with the second sub-housing 115b.

In some embodiments, the battery core mounting assembly 14 is installed from the open end of the second sub-housing 115b and fixed to the end of the second sub-housing 115b away from the bottom cover 15. An orthographic projection of the battery core mounting assembly 14 on the battery core assembly 13 covers the battery core assembly 13. By setting the distance between the end of the second sub-housing 115b close to the bottom cover 15 and the bottom cover 15 to be greater than the distance between the end of the first sub-housing 115a close to the bottom cover 15 and the bottom cover 15, an assembly distance of the battery core mounting assembly 14 installed from the open end of the second sub-housing 115b is shortened, facilitating the battery core mounting assembly 14 to be fixed at the end of the second sub-housing 115b away from the bottom cover 15.

By setting the housing assembly 11 with the structure that the housing 115 and the battery tube 116 are detachable, the volume of the battery core assembly 13 may be larger, facilitating the assembly and disassembly of the battery core assembly 13.

As shown in FIG. 1, the electronic atomization device also includes a sealing cover 16 arranged in the housing assembly 11. The sealing cover 16 is located on the same side of the atomization assembly 12 and the battery core assembly 13, away from the side of the vaping port 1121. The sealing cover 16 resists against the battery core assembly 13 to ensure the stability of the connection between the battery core assembly 13 and the battery core mounting assembly 14. In some embodiments, material of the sealing cover 16 is silicone.

The embodiments of the present disclosure provide the electronic atomization device 100. The electronic atomization device 100 includes the housing assembly 11, the battery core mounting assembly 14 and the battery core assembly 13. The battery core mounting assembly 14 is arranged in the housing assembly 11. The battery core assembly 13 is connected with the battery core mounting assembly 14 in the pluggable manner. In this way, the battery core assembly 13 may be convenient to be disassembled from the battery core mounting assembly 14, and it is conducive to recycling the battery core assembly 13. Furthermore, the assembly process does not involve welding wires, which is conducive to saving man-hours and improving assembly efficiency.

The above specification only refers to embodiments of the present disclosure, and does not limit the patent scope of the present disclosure. Any equivalent structure conversion or equivalent process conversion made by using the specification and drawings of the present disclosure, or directly or indirectly used in other related technologies fields are equally included in the scope of patent protection of the present disclosure.

## Claims

1. An electronic atomization device (100), **characterized by** comprising:
a housing assembly (11);
a battery core mounting assembly (14), arranged in the housing assembly (11); and
a battery core assembly (13), connected with the battery core mounting assembly (14) in a pluggable manner.

2. The electronic atomization device according to claim 1, wherein the battery core assembly (13) comprises an electrode pin (132), and the battery core mounting assembly (14) comprises an elastic clamping portion clamping the electrode pin (132), making the battery core assembly (13) to be connected with the battery core mounting assembly (14) in the pluggable manner.

3. The electronic atomization device according to claim 2, wherein the battery core assembly (13) comprises a battery core (131), and the electrode pin (132) is arranged at the end of the battery core (131) close to the battery core mounting assembly (14); the battery core mounting assembly (14) is defined with an insertion hole, the elastic clamping portion comprises elastic shrinking blocks arranged at intervals on the hole wall of the insertion hole, and the elastic shrinking blocks clamp the electrode pin (132) when the electrode pin (132) is inserted into the insertion hole.

4. The electronic atomization device according to claim 2, wherein the battery core assembly (13) comprises a battery core (131), and the electrode pin (132) is arranged at the end of the battery core (131) close to the battery core mounting assembly (14); the elastic clamping portion comprises an elastic clip (141), and the elastic clip (141) clamps the electrode pin (132).

5. The electronic atomization device according to claim 4, wherein the elastic clip (141) comprises a first clip (1411) and a second clip (1412), and the first clip (1411) and the second clip (1412) are arranged oppositely and at intervals; the surface of the first clip (1411) close to the second clip (1412) is defined with a first insertion groove (1411a), the surface of the second clip (1412) close to the first clip (1411) is defined with a second insertion groove (1412a), the first insertion groove (1411a) and the second insertion groove (1412a) are cooperated to form an insertion hole, and the electrode pin (132) is arranged in the insertion hole.

6. The electronic atomization device according to claim 5, wherein the end of the first clip (1411) close to the battery core assembly (13) is inclined towards a direction away from the second clip (1412), and the end of the second clip (1412) close to the battery core assembly (13) is inclined towards a direction away from the first clip (1411); and/or
the bottom wall of the end of the first insertion groove (1411a) close to the battery core assembly (13) comprises a first inclined surface (M), and the first inclined surface (M) is inclined towards the direction away from the second clip (1412); the bottom wall of the end of the second insertion groove (1412a) close to the battery core assembly (13) comprises a second inclined surface (N), and the second inclined surface (N) is inclined towards the direction away from the first clip (1411).

7. The electronic atomization device according to any one of claims 5 to 6, wherein the battery core mounting assembly (14) comprises an adapter plate base (142), an adapter plate (143) and a cover plate (144); the elastic clip (141) and the adapter plate (143) are located between the adapter plate base (142) and the cover plate (144), the elastic clip (141) is arranged on the surface of the adapter plate (143) close to the cover plate (144), and the cover plate (144) is located at the side of the adapter plate (143) close to the battery core assembly (13); the cover plate (144) is defined with a through hole (1441), and the electrode pin (132) penetrates through the through hole (1441) and is clamped by the elastic clip (141).

8. The electronic atomization device according to claim 7, wherein the elastic clip (141) comprises a connecting clip (1413), the two opposite ends of the connecting clip (1413) are respectively connected with the first clip (1411) and the second clip (1412), and the connecting clip (1413) is connected to the adapter plate (143).

9. The electronic atomization device according to claim 7, wherein the hole wall of the through hole (1441) comprises a third inclined surface (Q); the cross-sectional area of the through hole (1441) gradually increases along a direction of the cover plate (144) pointing towards the battery core assembly (13); or
the through hole (1441) comprises a first hole segment (1441a) and a second hole segment (1441b); the second hole segment (1441b) is located at the side of the first hole segment (1441a) close to the battery core assembly (13); the hole wall of the second hole segment (1441b) comprises the third inclined surface (Q), and the cross-sectional area of the second hole segment (1441b) gradually increases along the direction of the cover plate (144) pointing towards the battery core assembly (13).

10. The electronic atomization device according to claim 1, wherein the battery core mounting assembly (14) has an interference fit with the housing assembly (11); a connecting force between the battery core mounting assembly (14) and the housing assembly (11) is greater than a connecting force between the battery core assembly (13) and the battery core mounting assembly (14).

11. The electronic atomization device according to claim 1, comprising:
a bottom cover (15), detachably connected with an open end of the housing assembly (11); the side surface of the bottom cover (15) is defined with a groove (154), at least part of the groove (154) is exposed from the housing assembly (11), and the groove (154) is adjacent to a junction of the bottom cover (15) and the housing assembly (11).

12. The electronic atomization device according to claim 11, wherein the side surface of the bottom cover (15) is provided with a hook (155), and the inner surface of the housing assembly (11) is defined with a slot (113), and the slot (113) is arranged in conjunction with the hook (155); the groove (154) is arranged at intervals with the hook (155), and the groove (154) is arranged adjacent to the hook (155); the housing assembly (11) shields a part of the groove (154), and a junction of the end surface of the housing assembly (11) and the inner surface of the housing assembly (11) comprises a fourth inclined surface (L).

13. The electronic atomization device according to claim 1, comprising:
an atomization assembly (12); the housing assembly (11) is defined with a first mounting cavity (111) and a second mounting cavity (114), and the first mounting cavity (111) and the second mounting cavity (114) are arranged side-by-side along the width direction of the electronic atomization device (100); the atomization assembly (12) is arranged in the first mounting cavity (111), and the battery core mounting assembly (14) and the battery core assembly (13) are arranged in the second mounting cavity (114).

14. A battery assembly, **characterized by** comprising:
a housing assembly (11);
a battery core mounting assembly (14); and
a battery core assembly (13), connected with the battery core mounting assembly (14) in a pluggable manner.

15. The battery assembly according to claim 14, wherein the battery core assembly (13) comprises an electrode pin (132), and the battery core mounting assembly (14) comprises an elastic clamping portion clamping the electrode pin (132), making the battery core assembly (13) to be connected with the battery core mounting assembly (14) in the pluggable manner.
